# DEMANDE DE BREVET EUROPEEN

(11) **EP 1 977 969 A1**
(43) Date de publication de la demande: **08.10.2008**
(21) Numéro de dépôt: 08290241.2
(22) Date de dépôt: 13.03.2008
(51) Int. Cl.: B64C 7/00, B64C 25/02

(54) **Procédé de diminution du bruit aérodynamique généré par un atterrisseur d'aéronef**

(30) Priorité: 06.04.2007 FR 0702578
(71) Demandeur: Messier-Dowty SA, 78140 Velizy Villacoublay (FR)
(72) Inventeur: Seror, Christelle, 92290 Chatenay Malabry (FR); Goerger, Yann, 78370 Plaisir (FR)
(74) Mandataire: Parzy, Benjamin Alain

(57) **Abrégé**

L'invention concerne un procédé de réduction de bruit généré par un atterrisseur d'aéronef lorsque l'aéronef vole et que l'atterrisseur est déployé, consistant à enrober au moins une partie (7, 13, 21) d'un élément structurel d'atterrisseur d'un matériau (8, 14, 22) moins dense que celui de l'élément structurel pour donner à ladite partie une forme aérodynamique propre à régulariser un flux d'air s'écoulant autour de ladite partie.

## Description

L'invention concerne un procédé de diminution du bruit aérodynamique généré par un atterrisseur d'aéronef.

### ARRIERE-PLAN DE L'INVENTION

On sait que lors de l'atterrissage, les atterrisseurs déployés d'un aéronef peuvent contribuer significativement au bruit aérodynamique généré par l'aéronef.

On a proposé de disposer sur les atterrisseurs des carénages destinés à détourner l'écoulement d'air autour des parties susceptibles de générer du bruit telles que les cavités. Ces carénages jouent alors le rôle de déflecteur et peuvent être réalisés en métal ou en matériaux composites.

Ces carénages posent divers problèmes. Tout d'abord, il convient de prévoir sur les éléments structuraux de l'atterrisseur des points d'attaches dédiés à la solidarisation de ces carénages. En outre, ces carénages doivent être compatibles avec la cinématique de relevage de l'atterrisseur ce qui peut s'avérer complexe. Enfin, ils contribuent à augmenter la masse de l'atterrisseur.

De tels carénages sont illustrés par les documents EP 0 846 540, US 1 333 620, ou WO 2004/089742.

On a également proposé de revoir le dessin des éléments structurels pour supprimer toute cavité ou creux susceptible de générer du bruit. Bien que cette démarche soit efficace du point de vue de la réduction du bruit, elle conduit à un alourdissement substantiel des pièces de structure qui en pratique la rend inapplicable pour les grands éléments tels que les contrefiches, les bras de caisson...

### OBJET DE L'INVENTION

L'invention a pour objet un nouveau procédé permettant de diminuer la perturbation d'air autour des éléments d'un atterrisseur risquant de générer du bruit.

### BREVE DESCRIPTION DE L'INVENTION

Selon l'invention, on propose un procédé de réduction de bruit généré par un atterrisseur d'aéronef lorsque l'aéronef vole et que l'atterrisseur est déployé, consistant à enrober au moins une partie d'un élément structurel d'atterrisseur d'un matériau moins dense que celui de l'élément structurel pour donner à ladite partie une forme aérodynamique propre à régulariser un flux d'air s'écoulant autour de ladite partie.

Ainsi, l'élément structurel est inchangé et reste donc optimisé du point de vue de la masse et de sa résistance aux efforts. Il est habillé d'un matériau léger, par exemple de la mousse de polyuréthane haute densité, qui donne à l'élément structurel une forme régulière apte à diminuer la génération de tourbillons et les perturbations de l'écoulement de l'air, diminuant l'émission de bruit. Ainsi, au prix d'une augmentation de masse limitée, on préserve la structure de l'atterrisseur tout en donnant à ses éléments structurels des formes favorables du point de vue de l'acoustique.

### BREVE DESCRIPTION DES DESSINS

L'invention sera mieux comprise à la lumière de la description qui suit en référence aux figures des dessins annexés parmi lesquelles:
- la figure 1 est une vue en perspective d'un atterrisseur d'aéronef connu en soi ;
- la figure 2 est une vue en coupe selon la ligne II-II de la figure 1 ;
- la figure 3 est une vue en coupe selon la ligne III-III de la figure 1 ;
- la figure 4 est une vue en coupe selon la ligne IV-IV de la figure 1.
- la figure 5 est une vue en perspective d'un bras de contrefiche selon l'art antérieur, et après mise en oeuvre du procédé de l'invention.

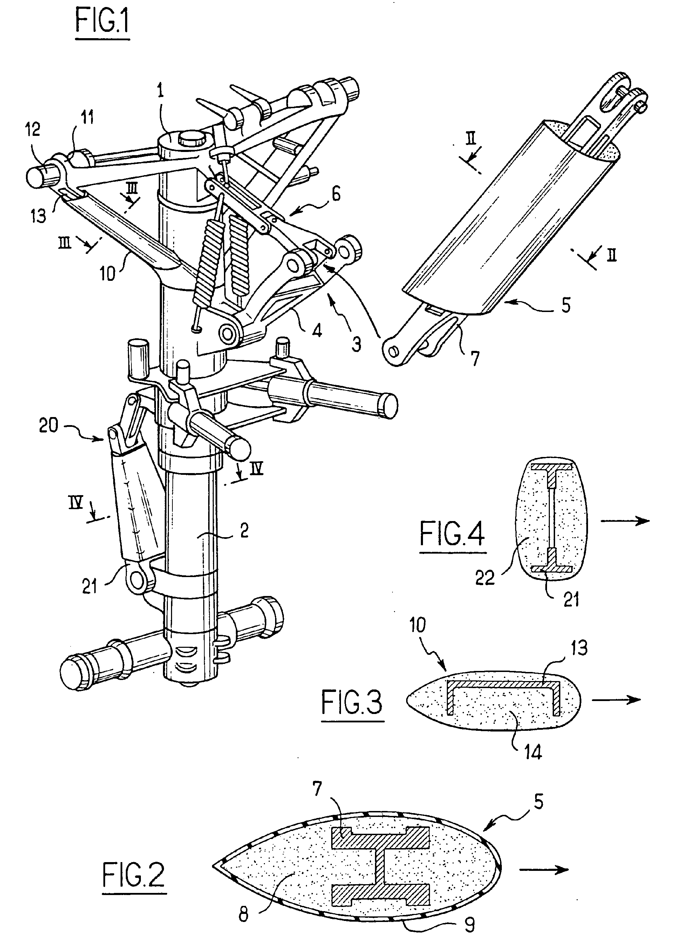

Sur les figures 2 à 4, une flèche indique la direction d'avancement de l'aéronef.

### DESCRIPTION DETAILLEE DE L'INVENTION

En référence à la figure 1, l'atterrisseur illustré comporte un caisson 1 dans lequel une tige 2 est montée pour coulisser télescopiquement. L'atterrisseur est maintenu dans la position déployée illustrée ici au moyen d'une contrefiche 3 comportant deux bras articulés entre eux, dont un bras inférieur 4 articulé sur le caisson 1 et un bras supérieur 5 articulé sur l'aéronef. Les bras 4, 5 sont maintenus alignés par un mécanisme de stabilisation 6.

Une première application de l'invention concerne le bras supérieur 5 de contrefiche. Comme cela est visible à la figure 2, celui-ci comporte une partie structurelle 7 réalisée en métal de section courante en forme de I, les ailes du I étant elles-mêmes évidées. La partie structurelle comporte donc de nombreux creux et cavités susceptibles de générer du bruit. Selon l'invention, le bras supérieur 5 est recouvert d'un matériau léger 8, ici de la mousse de polyuréthane haute densité, pour donner au bras supérieur 5 une forme régulière, aérodynamique. Le tout est ici recouvert d'un revêtement 9, constitué en l'occurrence d'un drapage de tissu de verre préimprégné et polymérisé à froid, destiné à parfaire l'état de surface du déflecteur ainsi réalisé mais également à protéger le matériau léger 8.

Ainsi l'écoulement de l'air autour du bras supérieur 5 est régularisé, ce qui contribue à diminuer le bruit généré par le bras supérieur 5.

Une autre application de l'invention est illustrée à la figure 3. Celle-ci représente l'un des bras 10 du caisson 1, visible à la figure 1, qui s'étend depuis une bobine 11 de réception d'un des axes 12 d'articulation du caisson 1 sur la structure, jusqu'au fût du caisson 1 recevant la tige 2. Le bras a une partie structurelle 13 de section courante en U, optimisée du point de vue de la masse et du passage des efforts. La partie structurelle 13 est enrobée d'un matériau léger, ici une matière élastomère, pour conférer au bras une forme régulière beaucoup plus favorable du point de vue acoustique.

Encore une autre application est illustrée à la figure 4 et concerne la branche inférieure 21 du compas 20 reliant la tige 2 au caisson 1 pour empêcher la tige 2 de tourner dans le caisson 1, tout en étant libre d'y coulisser. La branche inférieure 21 a une section courante comporte une âme (allégée par des orifices) et deux ailes. La branche inférieure 21 est recouverte d'une matière légère 22, ici une matière élastomère, afin de conférer à la branche inférieure 21 une forme régulière favorable du point de vue acoustique.

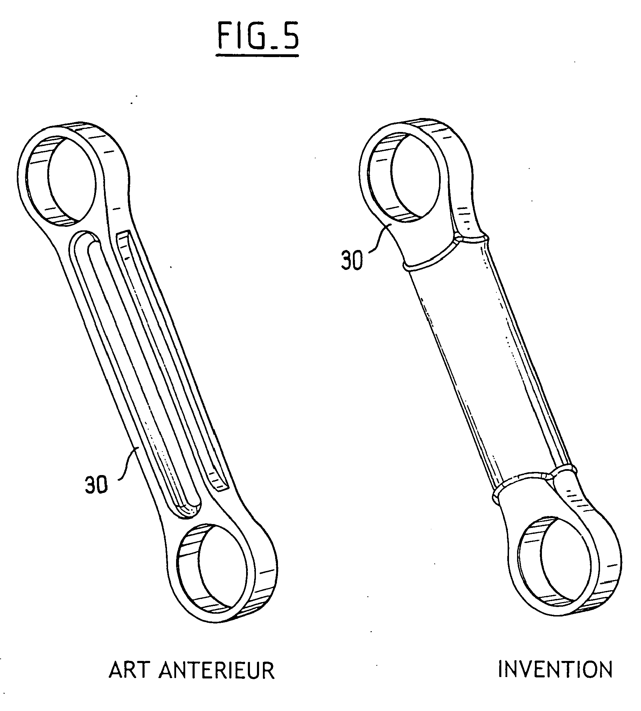

Une dernière application est illustrée à la figure 5. Celle-ci concerne un bras de contrefiche 30 d'atterriseur. Sur la partie gauche de la figure, on voit le bras 30 tel qu'il se présente avant son enrobage. Sur la droite de la figure, on distingue le bras après son enrobage selon l'invention à l'aide d'une mousse de poly-urétane. On distingue immédiatement que les creux et cavités du bras 30 sont remplis, et que le bras présente maintenant une forme externe régulière apte à minimiser les perturbations aérodynamiques, et donc les bruits associés.

Ainsi, tout en restant optimisé du point de vue de la masse et de la résistance au passage des efforts, l'élément structurel ainsi enrobé acquiert une forme externe apte à diminuer les bruits aérodynamiques. En particulier, les creux et cavités susceptibles de donner lieu à des perturbations aérodynamiques sont remplis. De préférence, on donnera à l'enrobage une forme régulière apte à diminuer le bruit généré par l'élément structurel, comme par exemple une forme de section circulaire, ovale, ou profilée.

Pour minimiser l'augmentation de masse, il convient de préférence de choisir un matériau d'enrobage moins dense que le matériau constituant l'élément structurel, mais possédant néanmoins une résistance suffisante pour constituer un carénage solide. On a cité des mousses de polyuréthane ou d'élastomère, mais on pourra utiliser d'autres matériaux similaires.

L'enrobage ainsi réalisé, outre son rôle de réducteur de bruit, protège également l'élément structurel des impacts de cailloux, d'outils, ainsi que de l'oxydation. On remarquera cependant que l'enrobage ainsi réalisé n'assure aucune fonction structurelle.

L'invention n'est pas limitée à ce qui vient d'être décrit, mais bien au contraire englobe toute variante entrant dans le cadre défini par les revendications.

En particulier, bien que l'invention est ici illustré en application à un atterrisseur auxiliaire d'aéronef, il est bien entendu que l'invention s'applique également à des atterrisseurs principaux, et peut notamment concerner le caisson, les éléments de contrefiche, le balancier, et tout autre élément structurel comportant des creux et cavités ou susceptible de générer du bruit aérodynamique.

On notera que l'enrobage selon l'invention peut être réalisé sur des éléments structuraux d'atterrisseurs déjà en service, par exemple à l'occasion d'une action de maintenance de ceux-ci. Il est ainsi possible d'obtenir immédiatement, et à peu de frais, un diminution sensible du bruit aérodynamique sur des matériels déjà en service.

## Revendications

1. Procédé de réduction de bruit généré par un atterrisseur d'aéronef lorsque l'aéronef vole et que l'atterrisseur est déployé, consistant à enrober au moins une partie (7, 13, 21) d'un élément structurel d'atterrisseur d'un matériau (8, 14, 22) moins dense que celui de l'élément structurel pour donner à ladite partie une forme aérodynamique propre à régulariser un flux d'air s'écoulant autour de ladite partie.

2. Procédé selon la revendication 1, dans lequel on enrobe l'élément structurel à l'aide d'un matériau moins dense que le matériau constitutif de l'élément structurel.

3. Procédé selon la revendication 1, dans lequel on recouvre la partie enrobée d'un revêtement mince (9).
